# EUROPEAN PATENT SPECIFICATION

(11) **EP 1 725 433 B1**
(45) Date of publication and mention of the grant of the patent: **07.10.2009**
(21) Application number: 05708981.5
(22) Date of filing: 09.03.2005
(51) Int. Cl.: B65D 88/62, B65D 90/04, B60P 1/60, B65G 53/50, B65G 69/08

(54) **TILTLESS BULK MATERIAL CARGO CONTAINER LINER AND METHOD OF DISCHARGING BULK CARGO MATERIAL**
AUSKLEIDUNG FÜR SCHÜTTGUTFRACHTBEHÄLTER OHNE KIPPFUNKTION UND VERFAHREN ZUR ENTLADUNG VON SCHÜTTGUTFRACHTEN
POCHE INTERIEUR POUR BENNE NON BASCULANTE DE TRANSPORT DE MATERIAUX EN VRAC ET METHODE DE DECHARGEMENT DE MATERIAUX EN VRAC

(30) Priority: 16.03.2004 US 800765
(43) Date of publication of application: 29.11.2006
(60) Divisional application: 08166879.0
(73) Proprietor: ILLINOIS TOOL WORKS INC., Glenview, IL 60026 (US)
(72) Inventor: MCMAHON, Michael J., Palantine, IL 60067 (US); PIOTROWSKI, Stanley, Addison, IL 60101 (US); MILLER, Douglas, Kingwood, TX 77339 (US); MINO, Oswaldo, Houston, TX 77064 (US); STOPPER, Shelley, Houston, TX 77057 (US)
(74) Representative: Finnie, Peter John
(86) International application number: PCT/IB2005/050860
(87) International publication number: WO 2005/090121

(56) References cited:
- EP-A- 1 101 712
- EP-A- 1 386 859
- WO-A-85/04637
- WO-A-88/09755
- GB-A- 2 372 984
- JP-A- 2001 080 695
- US-A- 3 170 600
- US-A- 5 494 394
- US-A1- 5 553 980

## Description

### FIELD OF THE INVENTION

The present invention relates generally to bulk material cargo containers within which fluid-like or flowable cargo materials, such as, for example, dry bulk chemicals, resins in powdered, flaked, and pelletized forms, coffee beans, flour, grains, rice, sugar or the like, are normally housed or contained while being shipped or transported, and more particularly to a new and improved bulk material cargo container liner system, for use in conjunction with such bulk material cargo containers, wherein the new and improved bulk material cargo container liner system not only enables or permits the bulk material cargo container to be utilized as a bulk material storage bin or silo, but in addition, facilitates the discharge of the bulk material cargo load from the bulk material cargo container in accordance with operational techniques which do not require the bulk material cargo container to be moved into a tilted mode, as is normally performed or conducted in accordance with conventional or **PRIOR ART** bulk material cargo load discharge techniques in order to effectively discharge the entire bulk material cargo load from the bulk material cargo container, but to the contrary, achieves such discharge of the bulk material cargo load from the bulk material cargo container as a result of effectively altering the angle of repose of the bulk material disposed within the bulk material cargo container.

### BACKGROUND OF THE INVENTION

Bulk material cargo containers are conventionally used, at different times, to house or contain different fluid-like or flowable bulk cargo materials, such as, for example, dry bulk chemicals, resins in powdered, flaked, and pelletized forms, flour, coffee beans, grains, rice, sugar, and the like, while the bulk cargo materials are being shipped or transported from one location to another by means of, for example, ship, truck, railroad, and the like. Since different bulk cargo materials are shipped or transported within particular bulk material cargo containers at different times, it is imperative that the bulk material cargo containers effectively be clean so as not to contaminate the bulk cargo materials comprising a particular bulk material cargo load with residual bulk cargo materials which may remain within the bulk material cargo container from a previously shipped or transported bulk material cargo load. Accordingly, in order to eliminate the normally necessary cleaning of each bulk material cargo container hold after a particular bulk material cargo load has been unloaded or discharged from a particular one of the bulk material cargo container holds, it has become conventional within the industry to employ removable bulk material cargo container liners within the cargo holds of the bulk material cargo containers wherein, after a particular bulk material cargo load has been delivered to its destination and discharged or unloaded, the bulk material cargo container liner is simply removed from the bulk material cargo container whereby the bulk material cargo container is again useable, without a significant amount of cleaning being required, for carrying another bulk material cargo load typically comprising fluid or flowable bulk cargo material. Bulk material cargo containers, having bulk material cargo container liners disposed therein for shipping or transporting fluid or flowable bulk cargo materials, may be found, for example, within United States Patent 5,657,896 which issued on August 19, 1997 to Matias**,** United States Patent 5,542,563 which issued on August 6, 1996 to Matias**,** United States Patent 5,489,037 which issued on February 6, 1996 to Stopper**,** United States Patent 5,421,476 which issued on June 6, 1995 to Matias**,** United States Patent 5,222,621 which issued on June 29, 1993 to Matias**,** United States Patent 5,193,710 which issued on March 16, 1993 to Podd, Sr. et al., United States Patent 5,152,735 which issued on October 6, 1992 to Podd, Jr. et al.**,** United States Patent 5,137,170 which issued on August 11,1992 to **Matias,** United States Patent 4,884,722 which issued on December 5, 1989 to Podd**,** and United States Patent 4,541,765 which issued on September 17, 1985 to Moore**.**

In connection with the aforenoted use of bulk material cargo container liners within bulk material cargo containers, it is noted that conventionally, bulk material cargo container liners are provided with an upper intake port through which the bulk cargo material is conducted into the bulk material cargo container liner, and a lower discharge port through which the bulk cargo material is discharged or exhausted outwardly from the bulk material cargo container liner. When the bulk cargo material is in fact to be discharged from the bulk material cargo container liner, the discharge port is opened, and gravitational forces will initially cause the bulk cargo material to naturally and automatically flow outwardly through the discharge port of the bulk material cargo container liner. This procedure will continue until the bulk cargo material reaches or attains its natural angle of repose, as determined along the slide surface of the bulk cargo material, at which point in time the various forces acting upon the bulk cargo material will effectively be equal and opposite to each other so as to attain or define a state of equilibrium whereby the bulk cargo material will be disposed in a static state and will no longer be able to flow. More particularly, for example, the vector of gravity which is operating or oriented along the slide surface of the bulk cargo material, so as to accordingly act upon the bulk cargo material in order to normally cause the bulk cargo material to naturally or automatically flow, will effectively be counteracted by means of other force vectors inherent to or characteristic of the bulk cargo material, such as, for example, conglomeration forces, nesting forces, frictional forces, shear forces, and the like.

The nesting or shear forces are or may be determined, for example, by means of the size, shape, and density characteristics of the bulk cargo material, whereas the conglomeration forces are or may be determined, for example, by means of moisture, additives, and other characteristics of the bulk cargo material. It can therefore be further appreciated that when the angle of the slide surface of the bulk cargo material, along which the bulk cargo material will normally flow, is equal to or less than the aforenoted angle of equilibrium, or in other words, the angle of repose of the bulk cargo material, the bulk cargo material will remain static and will not flow due to the fact that the force vector of gravity operating or oriented along the slide surface of the bulk cargo material is in fact sufficiently counteracted by means of the other aforenoted force vectors similarly operating or oriented along the slide surface of the bulk cargo material. Conversely, when the angle of the slide surface of the bulk cargo material, along which the bulk cargo material will normally flow, is greater than the aforenoted angle of equilibrium or the angle of repose of the bulk cargo material, the bulk cargo material will become dynamic and will in fact flow due to the fact that the force vector of gravity operating or oriented along the slide surface of the bulk cargo material is now in fact greater than, overcomes, or exceeds the other aforenoted force vectors similarly operating or oriented along the slide surface of the bulk cargo material.

Conventionally, the most common manner by means of which the aforenoted flowability characteristics of the bulk cargo material can be affected, altered, or adjusted, is to cause the bulk cargo container to undergo a tilting operation by means of which, for example, the front end of the bulk material cargo container is lifted to an elevational level which is higher than the back or rear end of the bulk material cargo container. More particularly, when a particular bulk material cargo container, carrying a particular bulk cargo material, undergoes a predetermined amount or degree of tilt, the particular bulk cargo material will once again begin to flow under the influence of gravity, and may accordingly be conducted toward the discharge port of the bulk material cargo container, because the angle of the slide surface of the bulk cargo material, or in other words, the angle of incline or decline, is now greater than or exceeds the angle of repose of the bulk cargo material such that the vector of gravity, operating or oriented along the slide surface of the bulk cargo material has effectively been increased so as to be greater than, exceed, or overcome the aforenoted nesting, frictional, shear, and conglomeration force vectors. It has been experienced, however, that the implementation of such bulk material cargo container tilting operations is not always easily or readily able to be accomplished, particularly in a cost-effective manner.

Normally, for example, in order to comprise economically viable bulk material cargo transportation, delivery, and distribution systems, the systems comprise an operative integration of bulk material cargo container transportation facilities, such as, for example, rail hopper cars or a fleet of bulk material cargo container tractor-trailer trucks, sea-going bulk material cargo container ships, and the like. In addition, bulk material cargo container tilt apparatus or mechanisms are conveniently or viably positioned at predetermined locations adjacent to or near the bulk material cargo container transportation facilities for operatively handling the aforenoted rail-hopper cars, tractor-trailer trucks, and ship containers in order to discharge or unload the bulk material cargo loads carried thereby. Still further, silo or other similar bulk material storage facilities are also conveniently or viably positioned at predetermined locations with respect to the aforenoted transportation and handling facilities so as to be capable of storing the unloaded bulk material cargo loads in preparation for, or in conjunction with, the distribution of such bulk material to end user customers. Unfortunately, as may be readily appreciated, the construction and operation of such an integrated transportation, handling, and distribution system is relatively expensive. Accordingly, it is only economically viable for such integrated transportation, delivery, and distribution systems to be constructed and operated by relatively large-sized companies located primarily within highly-industrialized nations. Therefore, it is appreciated still further that relatively medium-sized and small-sized companies are not able to viably compete economically with such relatively large-sized companies in view of the fact that such medium-sized and small-sized do not have access to, or the economic resources to construct and operate, the aforenoted integrated bulk material cargo container transportation and handling facilities, or the bulk material storage and distribution facilities.

At best, if such relatively medium-sized and small-sized companies nevertheless desire to engage in bulk material cargo load transportation, handling, and distribution businesses, and try to be competitive with the relatively large-sized companies, they are often forced to lease necessary services or facilities from the relatively large-sized companies which, again, is not economically advantageous. However, if a bulk material cargo container system could be developed wherein tilt-type handling apparatus or systems were no longer necessary for discharging or unloading the bulk material cargo load from the bulk material cargo containers, or in addition, if apparatus or systems could likewise be developed wherein auxiliary silo-type storage facilities were likewise no longer necessary for storing and distributing bulk material cargo loads from bulk material cargo containers, then the relatively medium-sized and small-sized companies could enjoy the economic advantages to be derived from bulk material cargo load transportation, handling, and distribution systems. The relatively medium-sized and small-sized companies could therefore in fact viably compete economically with the relatively large-sized companies.

Various other container systems have been proposed. Published international patent application WO 88/09755 describes a bulk handling unit for transporting powdered or granulated material. The unit comprises a flexible enclosure with inflatable chambers formed in the side walls. The purpose of the chambers when inflated is primarily to ensure that the flexible enclosure is self-supporting prior to filling with the bulk material but the chambers may also be re-inflated after filling the enclosure to push bulk material away from the walls and thereby assist with the emptying of the material via an internal vacuum tube.

US 5494394 describes a cargo flow control system comprising an inflatable bag that can be integral with or separate to a container liner. Inflation of the bag causes an effective tilting of the surface on which the bulk material lies to facilitate emptying of the container or container liner without having to mechanically tilt the container. In other respects the system is relatively conventional.

Published international patent application WO 85/04637 describes a device for final emptying of a silo comprising an inflatable closed membrane. Inflation of the partitioned membrane provides a slide surface to encourage bulk material away from the side wall(s) of the silo and to flow towards an opening in the base of the silo under the force of gravity.

However, a need still exists in the art for a new improved bulk material cargo container liner system, for use within bulk material cargo containers, wherein tilt-type handling apparatus would no longer be necessary for unloading or discharging bulk material cargo loads from bulk material cargo containers, and in addition, a new and improved bulk material cargo container liner system, for use within bulk material cargo containers, wherein auxiliary silo-type storage facilities would likewise no longer be necessary for storing and distributing bulk material cargo loads from bulk material cargo containers, whereby relatively medium-sized and small-sized companies can enjoy the economic advantages to be derived from bulk material cargo load transportation, handling, and distribution systems such that the relatively medium-sized and small-sized companies can in fact viably compete economically with the relatively large-sized companies.

### SUMMARY OF THE INVENTION

The aforenoted need is resolved in accordance with the teachings and principles of the present invention as a result of the provision of a new and improved bulk material cargo container liner system, for use within bulk material cargo containers, in accordance with claim 1. In accordance with a primary embodiment of the new and improved bulk material cargo container liner system, an inflatable bulk material cargo container liner has a pair of inflatable air bags or compartments integrally connected thereto or associated therewith. The inflatable air bags or compartments are located internally within the bulk material cargo container liner, and may comprise various cross-sectional configurations, such as, for example, being substantially triangular in cross-section, or alternatively, comprising a plurality of inflatable air bags having substantially circular cross-sectional configurations but being integrally connected together such that the overall cross-sectional configuration is substantially triangular. In either case, the inflatable air bag or compartment assemblies will have substantially right triangular configurations when disposed in their inflated states such that hypotenuse portions of the inflatable air bags or compartments will effectively be inclined with respect to the bottom or lower surface portion of the bulk material cargo container liner. The inflatable air bags are disposed within the oppositely disposed, laterally spaced, longitudinally extending lower corner regions of the bulk material cargo container liner, and are operatively associated with a vacuum tube assembly which may be located along the longitudinal centerline of the bulk material cargo container liner. In this manner, when the air bags or compartments are inflated, the angled hypotenuse portions of the air bags or compartments will effectively act upon the bulk cargo material disposed within the bulk material cargo container liner so as to effectively alter the incline angle of the slide surface of the bulk cargo material such that the slide surface of the bulk cargo material effectively attains an angle which is greater than the angle of repose of the bulk cargo material whereby the bulk cargo material can once again dynamically flow and be discharged out from the bulk material cargo container liner through means of the vacuum tube assembly.

### BRIEF DESCRIPTION OF THE DRAWINGS

Various other features and attendant advantages of the present invention will be more fully appreciated from the following detailed description when considered in connection with the accompanying drawings in which like reference characters designate like or corresponding component parts throughout the several views, and wherein:

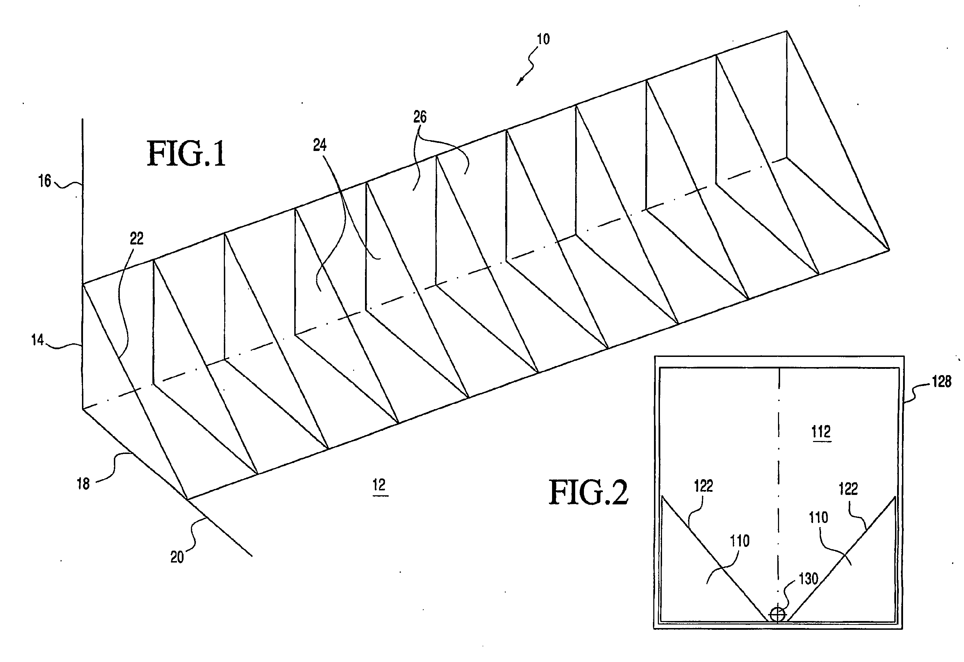

**FIGURE 1** is a schematic perspective view of a first embodiment of a new and improved inflatable air bag component which has been constructed in accordance with the principles and teachings of the present invention so as to have a substantially right-triangular cross-sectional configuration, and which is adapted to be utilized in conjunction with a new and improved bulk material cargo container liner of the present invention so as to facilitate the discharge or unloading of bulk cargo materials from the bulk material cargo container liner and the bulk material cargo container without necessitating any operative tilting of the bulk material cargo container;

**FIGURE 2** is a schematic cross-sectional view of a first embodiment of a bulk material cargo container liner, disposed within a bulk material cargo container, wherein the bulk material cargo container liner has a pair of inflatable air bag components disposed internally within the oppositely disposed, laterally spaced corner regions of the bulk material cargo container liner such that when the inflatable air bag components are inflated, as illustrated, the bulk cargo material, disposed within the bulk material cargo container liner, will be moved toward the longitudinal centerline region of the bulk material cargo container liner so as to be discharged through means of a single vacuum discharge tube assembly located along the longitudinal centerline region of the bulk material cargo container liner;

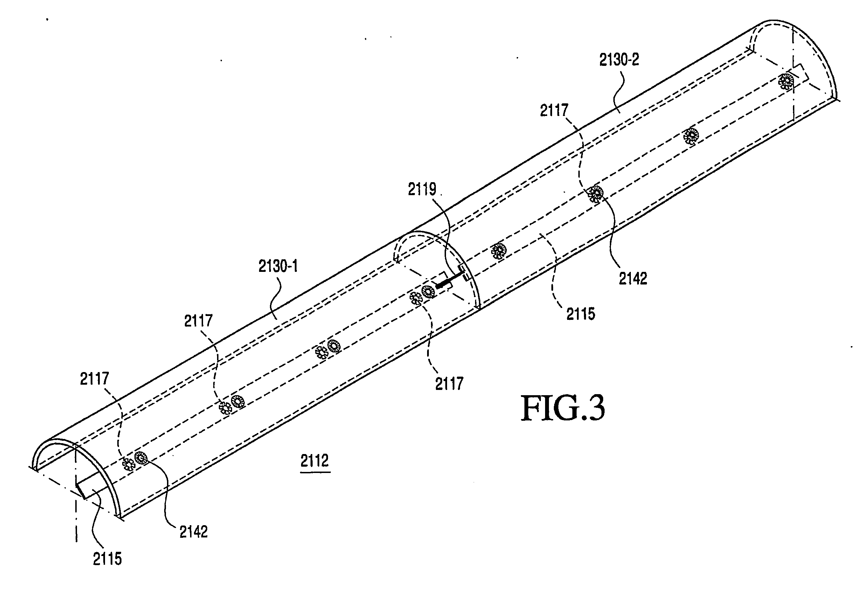

**FIGURE 3** is a perspective view of two of the vacuum discharge tube assembly sections wherein a first embodiment of an adjustable means is incorporated within the vacuum discharge tube assembly sections for altering the effective size of the aperture openings defined within the vacuum discharge tube assembly sections whereby depending upon the relative disposition of the adjustable means, different vacuum suction levels can be achieved so as to facilitate the discharge of the bulk cargo material from the interior portion of the bulk material cargo container liner;

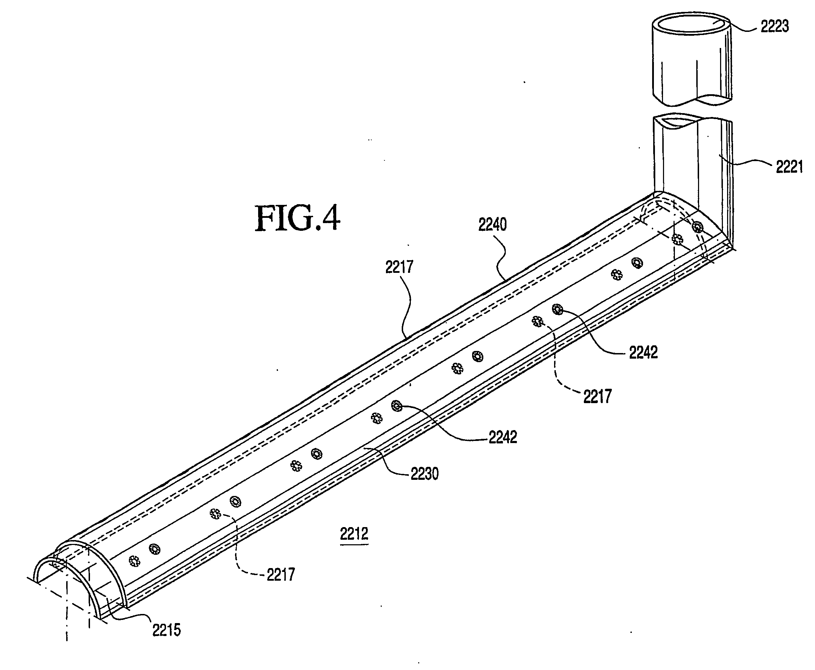

**FIGURE 4** is a perspective view of one of the vacuum discharge tube assembly sections wherein a second embodiment of an adjustable means is incorporated within the vacuum discharge tube assembly sections for, again, altering the effective size of the aperture openings defined within the vacuum discharge tube assembly sections whereby depending upon the relative disposition of the adjustable means, different vacuum suction levels can be achieved so as to facilitate the discharge of the bulk cargo material from the interior portion of the bulk material cargo container liner; and

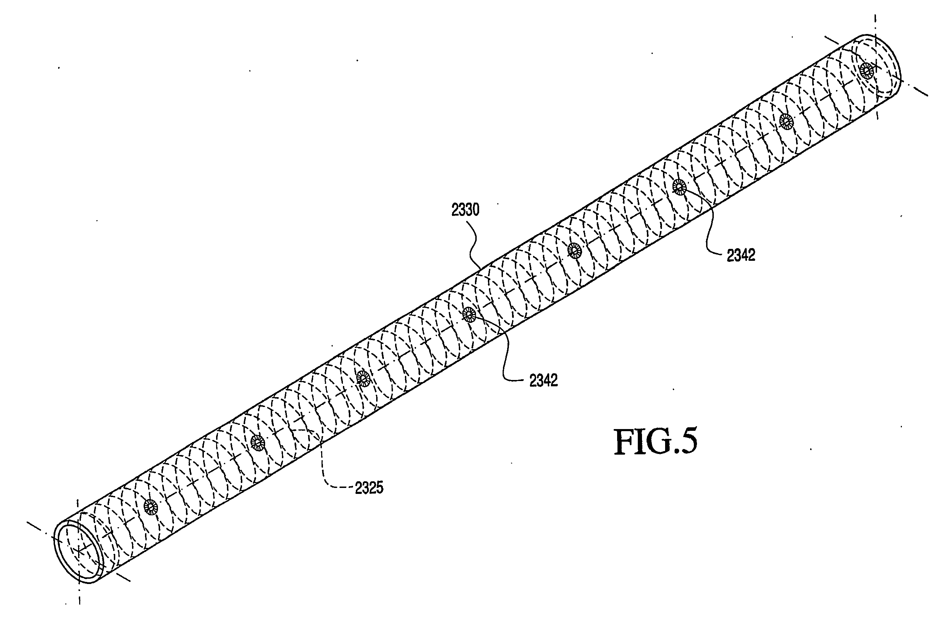

**FIGURE 5** is a perspective view of a first alternative embodiment of a vacuum discharge tube assembly, which may be utilized within any one of the bulk material cargo container liners as desired, wherein the vacuum discharge tube assembly has a substantially circular cross-sectional configuration and is provided internally with a coil spring member in order to effectively prevent the internal collapse of the vacuum discharge tube assembly as well as to facilitate the preservation of the tubular configuration of the vacuum discharge tube assembly despite bending or coiling of the same during, for example, the storage or transportation of the vacuum discharge tube assembly prior to the installation of the same within the bulk material cargo container liner.

### DETAILED DESCRIPTION OF THE PREFERRED EMBODIMENT

As has been noted hereinbefore, in order to discharge or unload a bulk material cargo load or contents from a bulk material cargo container liner, the bulk material cargo container, within which the bulk material cargo container liner is disposed, normally needs to be tilted, however, in accordance with the teachings and principles of the present invention, the need for tilting the bulk material cargo container, in order to discharge or unload the bulk material cargo load or contents therefrom, is obviated or rendered unnecessary. More particularly, if tilting of the bulk material cargo container is to be obviated, means must nevertheless be provided in order to cause the bulk material cargo load or contents to experience its requisite movement or flowability toward the discharge or unloading port so as to in fact be able to be discharged or unloaded from the bulk material cargo container liner. In accordance then with the particular principles and teachings of the present invention, the bulk material cargo container liner has integrally incorporated therein at least one vacuum discharge tube assembly and a plurality of inflatable air bag components wherein the inflatable air bag components are adapted to be inflated by means of, for example, suitable valve structures, not shown, which are adapted to be fluidically connected to suitable inflation and deflation control means, also not shown, so as to operatively control the movement of the bulk cargo material toward the vacuum discharge tube assemblies.

Referring then to the drawings, and more particularly to **FIGURE 1** thereof, a first embodiment of a new and improved inflatable air bag component, which has been constructed in accordance with the principles and teachings of the present invention, and which is adapted to be utilized within a corner region of a new and improved bulk material cargo container liner assembly which has also been constructed in accordance with the principles and teachings of the present invention, so as to facilitate the discharge or unloading of bulk cargo materials from the bulk material cargo container liner and the bulk material cargo container without necessitating any operative tilting of the bulk material cargo container, is disclosed and is generally indicated by the reference character 10. More particularly, it is seen that the new and improved inflatable air bag component 10 has a substantially right-triangular configuration. In accordance with the intended use of this particular embodiment of the inflatable air bag component 10, the inflatable air bag component 10 is adapted to be disposed internally within the bulk material cargo container liner 12 which has the configuration of a rectangular parallelepiped, as is conventionally known, such that the vertically oriented leg portion 14 of the inflatable air bag component 10 is adapted to be disposed along one vertical side wall 16 of the bulk material cargo container liner 12, while the horizontally oriented leg portion 18 of the inflatable air bag component 10 is adapted to be disposed along the bottom wall or floor portion 20 of the bulk material cargo container liner 12.

In this manner, it can be readily appreciated, in turn, that the hypotenuse portion 22 of the inflatable air bag component 10 will be disposed at a predetermined inclined angle within the interior portion of the bulk material cargo container liner 12. It is to be additionally appreciated that the inflatable air bag component 10 is adapted to extend throughout the entire longitudinal extent of the bulk material cargo container liner 12. Accordingly, when the inflatable air bag component 10 is disposed in its inflated state, the inclined hypotenuse portion 22 of the inflatable air bag component 10 will serve to effectively move the bulk cargo material, disposed within the bulk material cargo container liner 12, from the side wall and corner regions of the bulk material cargo container liner 12 toward an axially central region of the bulk material cargo container liner 12. Conversely, when the inflatable air bag component 10 is disposed in its deflated state, that is, prior to inflation for its intended use, the hypotenuse portion 22 of the inflatable air bag component 10 will effectively collapse into the internal corner region of the bulk material cargo container liner 12 as defined at the intersection of the vertical side wall portion 16 of the bulk material cargo container liner 12 and the horizontal bottom wall or floor portion 20 of the bulk material cargo container liner 12. As can be readily appreciated from well-known principles and teachings of plane geometry, the linear extent of the hypotenuse portion 22 of the inflatable air bag component 10 is less than the combined linear extents of the vertically oriented leg portion 14 of the inflatable air bag component 10 and the horizontally oriented leg portion 18 of the inflatable air bag component 10.

Therefore, it is to be noted that in order to permit or facilitate the aforenoted internal collapse of the inflatable air bag component 10 whereby the same can in fact be disposed within the corner region of the bulk material cargo container liner 12 when the inflatable air bag component 10 is to be disposed in its fully deflated state, those regions of the vertically oriented leg portion 14 of the inflatable air bag component 10 and the horizontally oriented leg portion 18 of the inflatable air bag component 10 which are located remote from the corner region of the inflatable air bag component 10 are not actually fixedly secured to the vertical side wall 16 of the bulk material cargo container liner 12 or to the bottom wall or floor portion 20 of the bulk material cargo container liner 12. It is noted further that the inflatable air bag component 10 has a plurality of axially spaced, substantially right-triangularly configured gussets 24 disposed internally within the inflatable air bag component 10 so as to not only provide internal support within the inflatable air bag component 10 throughout the entire axial extent of the same, but in addition, the plurality of gussets 24 effectively divide the entire internal region of the inflatable air bag component 10 into a plurality of axially separated cells 26. The cells 26 may comprise fluidically separated compartments so as to be inflated separately by suitable means, not shown, or alternatively, the cells 26 may be fluidically connected to each other so as to be able to be inflated simultaneously by suitable means, also not shown. The foregoing use of one or more of the inflatable air bag components within bulk material cargo container liners can be better appreciated with reference being further made to **FIGURE 2**. More particularly, as illustrated within **FIGURE 2**, a bulk material cargo container liner 112 is disposed internally within a bulk material cargo container 128, and it is seen that the bulk material cargo container liner 112 has a pair of inflatable air bag components 110, each one of which is substantially similar to the inflatable air bag component 10 as disclosed within **FIGURE 1**, disposed internally within the oppositely disposed, laterally spaced corner regions of the bulk material cargo container liner 112. In this manner, when both of the inflatable air bag components 110 are inflated, as is illustrated, the bulk cargo material, disposed within the bulk material cargo container liner 112, will be moved toward the longitudinal centerline region of the bulk material cargo container liner 112 so as to be discharged through means of a single, axially oriented vacuum discharge tube assembly 130 which is located along the longitudinal centerline region of the bulk material cargo container liner 112 and which is fluidically connected to a suitable source of vacuum, not shown.

Continuing further, as has been noted hereinbefore, and as is well-known in the art and industry, the bulk cargo material disposed internally within the bulk material cargo container liners is adapted to be discharged and exhausted by means of a source of vacuum, not shown, which is operatively and fluidically connected to the rear end portions of the vacuum discharge tube assemblies which are adapted to project outwardly through the rear end wall member of the bulk material cargo container liner. As may therefore be further appreciated, due to well-known pressure differential or pressure drop phenomena or principles, a higher vacuum or suction force level may therefore effectively be impressed upon that portion of the bulk cargo material which is disposed within the vicinity of the rear end wall member of the bulk material cargo container liner as opposed to that portion of the bulk cargo material which is disposed within the vicinity of the front end wall member of the bulk material cargo container liner. Accordingly, if it is determined that only a relatively low, or an insufficient, amount of vacuum or suction force level can be impressed upon that portion of the bulk cargo material which is disposed within the vicinity of the front end wall member of the bulk material cargo container liner whereby that portion of the bulk cargo material which is disposed within the vicinity of the front end wall member of the bulk material cargo container liner cannot necessarily be sufficiently or completely discharged and exhausted, it may be desired to structurally incorporate means within the vacuum discharge tube assemblies which can effectively alter the vacuum or suction force levels that can be generated throughout the longitudinal extent of the overall vacuum discharge tube assemblies between the rear and front wall members of the bulk material cargo container liner whereby, for example, greater vacuum or suction force levels can in fact be generated within the vicinity of the front end wall member of the bulk material cargo container liner.

More particularly, as disclosed within **FIGURE 3**, the vacuum discharge tube assembly may comprise a plurality of longitudinally aligned sections 2130-1,2130-2, and it is seen that a first means, for altering the effective vacuum or suction force levels that can be impressed upon the bulk cargo material throughout the longitudinal extent of the bulk material cargo container liner, resides in the provision of a pair of apertured strips or plates 2115, only one of which is actually illustrated, within each one of the vacuum discharge tube assembly sections 2130-1,2130-2 such that the apertured strips or plates 2115 are respectively movably mounted upon the interior portion of each one of the vacuum discharge tube assembly sections 2130-1,2130-2 between **EXTENDED** and **RETRACTED** positions. Each one of the strips or plates 2115 is provided with a plurality of longitudinally or axially spaced apertures 2117, and accordingly, depending upon the relative disposition of the strips or plates 2115 with respect to the vacuum discharge tube assembly sections 2130-1,2130-2, the apertures 2117 defined within the strips or plates 2115 can either be aligned with respect to, for example, the apertures 2142 defined within the peripheral side portions of a particular one of the vacuum discharge tube assembly sections, as disclosed, for example, in connection with vacuum discharge tube assembly section 2130-2, or alternatively, the apertures 2117 defined within the strips or plates 2115 can be misaligned with respect to, for example, the apertures 2142 defined within the peripheral side portions of a particular one of the vacuum discharge tube assembly sections, as disclosed, for example, in connection with vacuum discharge tube assembly section 2130-1.

It may therefore be appreciated that when the apertures 2117 defined within a particular one of the strips or plates 2115 are misaligned with respect to the apertures 2142 defined within a particular one of the vacuum discharge tube assembly sections, such as, for example, in connection with the strip or plate 2115 and the vacuum discharge tube assembly section 2130-1, air flow from the interior portion of the bulk material cargo container liner 2112 and through the apertures 2142 defined within the vacuum discharge tube assembly section 2130-1 is effectively blocked. Conversely, when the apertures 2117 defined within a particular one of the strips or plates 2115 are aligned with respect to the apertures 2142 defined within a particular one of the vacuum discharge tube assembly sections, such as, for example, the vacuum discharge tube assembly section 2130-2, air flow from the interior portion of the bulk material cargo container liner 2112 and through the apertures 2142 defined within the vacuum discharge tube assembly section 2130-2 is effectively permitted.

Accordingly, different levels of vacuum or suction force are able to be generated and impressed upon different regions of the bulk cargo material disposed within the bulk material cargo container liner 2112 so as to facilitate and ensure the discharge and exhaust of the bulk cargo material from all longitudinal or axial regions of the bulk material cargo container liner 2112. It is lastly noted in connection with this adjustment system that the strips or plates 2115, 2115 disposed within adjacent ones of the vacuum discharge tube assembly sections 2130-1,2130-2 may be interconnected together by suitable means, such as, for example, a slot and strap assembly 2119. In this manner, the strips or plates 2115, 2115 may be moved to, or disposed at, various longitudinal or axial positions as desired or required.

With reference now being made to **FIGURE 4**, it is seen that a second means, for altering the effective vacuum or suction force levels that can be impressed upon the bulk cargo material throughout the longitudinal extent of the bulk material cargo container liner, resides in the provision of an apertured sleeve member 2215 within each one of the vacuum discharge tube assembly sections 2230 such that the apertured sleeve member 2215 is respectively movably mounted within the interior portion of each one of the vacuum discharge tube assembly sections 2230 between **EXTENDED** and **RETRACTED** positions. The sleeve members 2215 are similar to the aforenoted strips or plates 2115 in that each one of the sleeves 2215 is provided with two sets of longitudinally or axially spaced apertures 2217, only one set being visible, and accordingly, depending upon the relative disposition of the sleeves 2215 with respect to the vacuum discharge tube assembly sections 2230, the apertures 2217 defined within the sleeves 2215 can either be aligned with respect to, for example, the apertures 2240,2242 defined within the peripheral side portions of a particular one of the vacuum discharge tube assembly sections 2230, or alternatively, the apertures 2117 defined within the sleeves 2215 can be misaligned with respect to, for example, the apertures 2240,2242 defined within the peripheral side portions of a particular one of the vacuum discharge tube assembly sections 2230. It may therefore be appreciated that when the apertures 2217 defined within a particular one of the sleeves 2215 are misaligned with respect to the apertures 2240, 2242 defined within a particular one of the vacuum discharge tube assembly sections 2230, air flow from the interior portion of the bulk material cargo container liner 2212 and through the apertures 2240,2242 defined within the vacuum discharge tube assembly section 2230 is effectively blocked. Conversely, when the apertures 2217 defined within a particular one of the sleeves 2215 are aligned with respect to the apertures 2240,2242 defined within a particular one of the vacuum discharge tube assembly sections 2230, air flow from the interior portion of the bulk material cargo container liner 2212 and through the apertures 2240,2242 defined within the vacuum discharge tube assembly section 2230 is effectively permitted.

Accordingly, again, different levels of vacuum or suction force are able to be generated and impressed upon different regions of the bulk cargo material disposed within the bulk material cargo container liner 2212 so as to facilitate and ensure the discharge and exhaust of the bulk cargo material from all longitudinal or axial regions of the bulk material cargo container liner 2212. It is also noted, in connection with this adjustment system, that the diametrical size of the apertures 2217,2240,2242, which are respectively defined within the sleeve member 2215 and the vacuum discharge tube assembly section 2230, may be varied so as to readily permit, for example, partial closure of the apertures 2217,2240,2242 and partial blockage of the air flow therethrough. In addition, the pitch or distance defined between successive ones of the apertures 2217,2240,2242 may likewise be varied. Such variations permit different vacuum or suction force levels to be attained within the vacuum discharge tube assembly sections 2230, and such variations may likewise also be incorporated within the strips or plates 2115 as disclosed in connection with the embodiment illustrated within **FIGURE 3**.

It is lastly noted that, in connection with the different bulk cargo materials that are being transported within the bulk material cargo container liners, it is sometimes easier to discharge and exhaust particular types of bulk cargo materials than other types of bulk cargo materials. For example, in connection with the disposition of relatively coarse bulk cargo materials, such as, for example, pellets, tablets, or the like, within the bulk material cargo container liner, a substantially large volume of air is effectively present within the entire or overall bulk cargo material load in view of the fact that the air can permeate all of the spaces or interstices defined between individual ones of adjacent or abutting units, that is, the pellets, tablets, or the like, which comprise the bulk cargo material load. Accordingly, when such bulk cargo material is to be discharged and exhausted through means of the vacuum discharge tube assembly, the air present within the entire or overall bulk cargo material load is able to flow and effectively entrain the bulk cargo material therewith and therealong so as to in fact carry, discharge, and exhaust the bulk cargo material out from the bulk material cargo container liner. On the other hand, when the bulk cargo material comprises relatively fine material, such as, for example, powdery materials or the like, there is a relatively small volume of air present within the entire or overall bulk cargo material load in view of the fact that the minute particles, comprising such powdery type bulk cargo material, are in effect packed together so densely that substantially sized spaces or interstices, into which the air can readily permeate, simply do not exist. Therefore, when such bulk cargo materials are to be discharged and exhausted from the bulk material cargo container liner, the vacuum or suction forces cannot develop the necessary air flow within the bulk cargo material so as to entrain the bulk cargo material therealong. Accordingly, in order to rectify the aforenoted deficiency in connection with the discharge and exhaust of powdery type bulk cargo materials, a vertically oriented standpipe 2221, as shown in **FIGURE 4****,** is structurally and fluidically connected to the forwardmost end portion of the forwardmost vacuum discharge tube assembly section 2230. The upper end portion 2223 of the vertically oriented standpipe 2221 is adapted to be disposed above the upper level portion of the bulk cargo material disposed within the bulk material cargo container liner 2212, and in this manner, ambient air is always effectively present within the front end portion of the forwardmost vacuum discharge tube assembly section 2230 so as to effectively exert atmospheric pressure upon any bulk cargo material present within the entire vacuum discharge tube assembly 2230. Such atmospheric air fluidically cooperates with the vacuum or suction forces operating at the rearward end of the vacuum discharge tube assembly 2230, and accordingly, even powdery type bulk cargo material can be readily discharged and exhausted from the bulk material cargo container liner 2212.

Continuing further, and in connection with the actual fabrication of any one of the previously disclosed vacuum discharge tube assemblies, an additional embodiment, mode, or technique is envisioned in accordance with the principles and teachings of the present invention and is disclosed within **FIGURE 5****.** For example, as disclosed within **FIGURE 5****,** it is seen that each one of the vacuum discharge tube assembly sections 2330 has a coil spring member 2325 which is disposed internally thereof and which extends throughout the entire longitudinal or axial extent of each vacuum discharge tube assembly section 2330. In this manner, the coil spring members 2325 effectively help to prevent the internal collapse of any one of the vacuum discharge tube assembly sections 2330, not only when the vacuum discharge tube assembly sections 2330 are disposed internally within bulk material cargo container liners, and when the bulk material cargo container liners have bulk cargo material disposed therein, but in addition, the disposition or presence of the coil spring members 2325 internally within the vacuum discharge tube assembly sections 2330 effectively prevent the internal collapse of the same while the vacuum discharge tube assembly sections 2330 are being bent, flexed, coiled, or the like, during, for example, handling or storage of the same.

Having disclosed the aforenoted various structures comprising the inflatable air bag components, the vacuum discharge tube assemblies, and the overall bulk material cargo container liner systems with which the inflatable air bag components and the vacuum discharge tube assemblies are to be utilized, a brief description of the operation of the bulk material cargo container liner systems, having the inflatable air bag components and the vacuum discharge tube assemblies associated therewith, will now be described. It is to be appreciated, for example, that when a bulk material cargo load is initially loaded or charged into any one of the bulk material cargo container liners, the vacuum discharge tube assemblies will be disposed at their operational positions internally within the inflated bulk material cargo container liners, however, the inflatable air bag components will be disposed in their deflated states so as to in fact permit a full and complete bulk material cargo load to be charged or loaded into the bulk material cargo container liner. Subsequently, when the bulk material cargo load is to be discharged, unloaded, and exhausted from any one of the bulk material cargo container liners, each one of the vacuum discharge tube assemblies will be fluidically connected to the source of vacuum, not shown, the source of vacuum will be activated, and the bulk cargo material will flow naturally toward each one of the vacuum discharge tube assemblies. At a particular point in time, however, the natural flow of the bulk cargo material toward the vacuum discharge tube assemblies will cease in accordance with the aforenoted gravitational forces acting upon the bulk cargo material, that is, when the angle of repose of the bulk cargo material reaches a particular point or level. At this point in time, the inflatable air bag components can be progressively inflated so as to positively alter or enhance the angle of repose of the bulk cargo material whereby the same can once again flow toward the vacuum discharge tube assemblies so as to be exhausted from the bulk material cargo container liners.

Thus, it may be seen that in accordance with the various principles and teachings of the present invention, there has been disclosed a plurality of new and improved bulk material cargo container liner systems wherein each one of the systems comprises an inflatable bulk material cargo container liner which has at least one inflatable air bag component, and at least one vacuum discharge tube assembly, operatively associated therewith. When the inflatable air bag components are progressively inflated so as to assist the unloading, discharging, and exhausting of the bulk cargo material from the interior of the bulk material cargo container liner, after a portion of the bulk cargo material has been discharged, unloaded, and exhausted in accordance with natural gravitational forces whereby the surface of the bulk cargo material has already attained a particular angle of repose, the angle of repose of the surface of the bulk cargo material will effectively be positively readjusted such that the remaining portion of the bulk cargo material can be discharged, unloaded, and exhausted without necessitating any tilting of the bulk material cargo container and the bulk material cargo container liner disposed therein.

Obviously, many variations and modifications of the present invention are possible in light of the above teachings. It is therefore to be understood that within the scope of the appended claims, the present invention may be practiced otherwise than as specifically described herein.

## Claims

1. A bulk material cargo container liner system for disposition within a bulk material cargo container (128), comprising:
a bulk material cargo container liner (12,112), for disposition within a bulk material cargo container (128), for containing bulk cargo material, and having a substantially rectangular parallelepiped structure when erected whereby said bulk material cargo container liner (12,112) comprises a front wall surface portion, a pair of side wall surface portions (16), a top wall surface portion, a bottom wall surface portion (20), a rear wall surface portion, and a longitudinal axial extent defined between said rear wall surface portion and said front wall surface portion;
at least one vacuum discharge tube member (130) disposed internally within said bulk material cargo container liner (12,112) for discharging the bulk cargo material, which is to be disposed within said bulk material cargo container liner, toward a bulk material discharge port defined within said rear wall surface portion of said bulk material cargo container liner; and,
at least one inflatable air bag component (10,110) disposed internally within said bulk material cargo container liner (12,112), the at least one inflatable air bag component (10,110) operatively associated with said bulk material cargo container liner (12,112) for causing the bulk cargo material to undergo fluid flow toward said at least one vacuum discharge tube member (130) disposed within said bulk material cargo container liner (12,112) when said at least one inflatable air bag component (10,110) is inflated from a relatively deflated state to a relatively inflated state so as to facilitate the evacuation of the bulk cargo material from the interior of said bulk material cargo container liner (12,112) without requiring the tilting of said bulk material cargo container (128),
**characterized in that** said at least one inflatable air bag component (10,110) is disposed within a corner region of the bulk material cargo container liner (12,112) proximate a junction of one side wall surface portion (16) and the bottom wall surface portion (20) and when inflated has:
a substantially right-triangular cross-sectional configuration with the hypotenuse portion (22) thereof disposed toward said at least one vacuum discharge tube member (130), thereby altering the angle of repose of the bulk cargo material disposed within said bulk material cargo liner (12,112) for causing the bulk cargo material to undergo fluid flow toward said at least one vacuum discharge tube member (130);
a vertically oriented leg portion (14) adapted to be disposed along said one side wall surface portion (16) of the bulk material cargo container liner (12,112); and,
a horizontally orientated leg portion (18) adapted to be disposed along said bottom wall surface portion (20) of the bulk material cargo container liner (12,112),
wherein those regions of the vertically oriented leg portion (14) and the horizontally orientated leg portion (18) which are located remote from the right-triangular corner region of the inflatable air bag component (10,110) are not fixedly secured to the one side wall portion (16) or to the bottom wall surface portion (20) of the bulk material cargo liner (12).

2. The system as set forth in Claim 1, wherein:
said at least one inflatable air bag component (10,110) has a plurality of axially-spaced, substantially right-triangularly configured gussets (24) disposed internally within the inflatable air bag component (10, 110) which divide the entire internal region of the inflatable air bag component (10,110) into a plurality of axially separated cells (26).

3. The system as set forth in Claim 2, wherein:
said plurality of axially separated cells (26) comprise fluidically separated compartments.

4. The system as set forth in Claim 2, wherein:
said plurality of axially separated cells (26) comprise fluidically connected compartments.

5. The system as set forth in any preceding Claim, wherein:
said at least one vacuum discharge tube member comprises a single vacuum discharge tube assembly (130,2130,2230,2330) disposed along the axial centerline of said bulk material cargo container liner;
said bulk material cargo liner (12,1 12) comprises a pair of oppositely disposed side corner regions proximate a junction between each of the side wall surface portions (16) and the bottom wall surface portion (20); and,
said at least one inflatable air bag component (10,110) comprises a pair of inflatable air bag components (110) disposed within the oppositely disposed side corner regions of said bulk material cargo container liner (12, 112) so as to cause bulk cargo material to flow from said oppositely disposed side corner regions of said bulk material cargo container liner (12,112) toward said single vacuum discharge tube assembly (130) disposed along said axial centerline of said bulk material cargo container liner (12,112) when said pair of inflatable air bag components (110) are inflated.

6. The system as set forth in any preceding Claim, wherein:
said at least one vacuum discharge tube member (130) comprises a vacuum discharge tube assembly (130,2130) which comprises a plurality of vacuum discharge tube sections (2130-1,2130-2) connected together so as to extend throughout said longitudinal axial extent of said bulk material cargo container liner (12,112).

7. The system as set forth in Claim 6, further comprising:
means (2115,2215:2142,2242:2117) operatively connected to said plurality of vacuum discharge tube sections (2130-1,2130-2) for adjusting the amount of vacuum suction force which can effectively be impressed upon each one of said vacuum discharge tube sections (2130-1,2130-2).

8. The system as set forth in any preceding Claim, wherein:
said at least one vacuum discharge tube member (130,2330) has a circular cross-sectional configuration; and
a coil spring member (2325) is disposed internally within said at least one vacuum discharge tube member (2330) so as to prevent the internal collapse of said at least one vacuum discharge tube member (2330) when said at least one vacuum discharge tube member (2330) undergoes any one of flexed, bent, and coiled manipulations.

9. A method of discharging bulk cargo material from a bulk material cargo container (128) without the necessity of disposing the bulk material cargo container (128) within a tilted mode, comprising the steps of:
providing a bulk material cargo container liner (12,112), having a substantially rectangular parallelepiped structure when erected and therefore comprising a front wall surface portion, a pair of side wall surface portions (16), a top wall surface portion, a bottom wall surface portion (20), a rear wall surface portion, and a longitudinal extent defined between said rear wall surface portion and said front wall surface portion, within a bulk material cargo container (128);
operatively mounting at least one vacuum discharge tube member (130) internally within said bulk material cargo container liner (12,112) such that said at least one vacuum discharge tube member (130) can therefore discharge the bulk cargo material, which is disposed within said bulk material cargo container liner (12,112), toward a bulk material discharge port defined within said rear wall surface portion of said bulk material cargo container liner (12, 112);
disposing at least one inflatable air bag component (10,110), operatively associated with said bulk material cargo container liner (12,112), internally within said bulk material cargo container liner (12,112) in a deflated state;
permitting the bulk cargo material to be exhausted through said at least one vacuum discharge tube member (130) under gravitational forces until the angle of repose of the bulk cargo material reaches a state at which fluid flow of the bulk cargo material no longer occurs under gravitational forces; and,
inflating said at least one inflatable air bag component (10,110) to cause the bulk cargo material disposed within said bulk material cargo container liner (12,112) to again undergo fluid flow toward said at least one vacuum discharge tube member (130) without said bulk material cargo container (128) being required to be disposed within a tilted mode in order to achieve the fluid flow of the bulk cargo material toward said at least one vacuum discharge tube member (130) and facilitate the evacuation of the bulk cargo material from said bulk material cargo container liner (12,112),
**characterized in that**:
said at least one inflatable air bag component (10,110) is disposed within a corner region of the bulk material cargo container liner (12, 112) proximate a junction of one side wall surface portion (16) and the bottom wall surface portion (20), wherein when inflated the at least one inflatable air bag component (10,110) has:
a substantially right-triangular cross-sectional configuration with the hypotenuse portion (22) thereof disposed toward said at least one vacuum discharge tube member (130);
a vertically oriented leg portion (14) adapted to be disposed along said one side wall surface portion (16) of the bulk material cargo container liner (12,112); and,
a horizontally orientated leg portion (18) adapted to be disposed along said bottom wall surface portion (20) of the bulk material cargo container liner (12,112),
wherein those regions of the vertically oriented leg portion (14) and the horizontally orientated leg portion (18) which are located remote from the right-triangular corner region of the inflatable air bag component (10) are not fixedly secured to the one side wall portion (16) or to the bottom wall surface portion (20) of the bulk material cargo liner (12); and,
said at least one inflatable air bag component (10,110) is inflated to its substantially right-triangular cross-sectional configuration so as to alter the angle of repose of the bulk cargo material disposed within said bulk material cargo container liner (12, 112) and thereby cause the bulk cargo material disposed within said bulk material cargo container liner (12,112) to again undergo fluid flow toward said at least one vacuum discharge tube member (130).

## Patentansprüche

1. Liner-System für einen Schüttgutfrachtbehälter zur Anordnung in einem Schüttgutfrachtbehälter (128), das Folgendes umfasst:
einen Liner (12, 112) für einen Schüttgutfrachtbehälter zur Anordnung in einem Schüttgutfrachtbehälter (128) zur Aufnahme von Schüttgutfracht und mit einer im Wesentlichen rechteckigen parallelepipedischen Struktur, wenn er aufgerichtet ist, wobei der Liner (12, 112) für einen Schüttgutfrachtbehälter einen Vorderwandflächenteil, ein Paar Seitenwandflächenteile (16), einen Deckenwandflächenteil, einen Bodenwandflächenteil (20), einen Rückwandflächenteil und eine zwischen dem Rückwandflächenteil und dem Vorderwandflächenteil definierte axiale Längserstreckung aufweist;
mindestens ein Vakuum-Entladungsrohrglied (130), das innen in dem Liner (12, 112) für einen Schüttgutfrachtbehälter zum Entladen von in dem Schüttgutfrachtbehälter anzuordnender Schüttgutfracht zu einer in dem Rückwandflächenteil des Liners für einen Schüttgutfrachtbehälter definierten Schüttgutentladeöffnung angeordnet ist; und
mindestens eine aufblasbare Luftsackkomponente (10, 110), die innen in dem Liner (12, 112) für einen Schüttgutfrachtbehälter angeordnet ist, wobei die mindestens eine Luftsackkomponente (10, 110) dem Liner (12, 112) für einen Schüttgutfrachtbehälter wirkzugeordnet ist, um zu bewirken, dass die Schüttgutfracht eine Fluidströmung zu dem mindestens einen in dem Liner (12, 112) für einen Schüttgutfrachtbehälter angeordneten Vakuum-Entladungsrohrglied (130) erfährt, wenn die mindestens eine aufblasbare Luftsackkomponente (10, 110) aus einem im Verhältnis luftleeren Zustand in einen im Verhältnis aufgeblasenen Zustand aufgeblasen wird, um die Entleerung der Schüttgutfracht aus dem Inneren des Liners (12, 112) für einen Schüttgutfrachtbehälter zu erleichtern, ohne dass der Schüttgutfrachtbehälter (128) gekippt werden muss,
**dadurch gekennzeichnet, dass** die mindestens eine aufblasbare Luftsackkomponente (10, 110) in einem Eckbereich des Liners (12, 112) für einen Schüttgutfrachtbehälter nahe einer Verbindungsstelle eines Seitenwandflächenteils (16) und des Bodenwandflächenteils (20) angeordnet ist und im aufgeblasenen Zustand Folgendes aufweist:
eine im Wesentlichen rechtwinklig-dreieckige Querschnittskonfiguration, wobei der Hypotenusenteil (22) davon zu dem mindestens einen Vakuum-Entladungsrohrglied (130) angeordnet ist, wodurch der Schüttwinkel der in dem Liner (12, 112) für einen Schüttgutfrachtbehälter angeordneten Schüttgutfracht geändert wird, damit die Schüttgutfracht eine Fluidströmung zu dem mindestens einen Vakuum-Entladungsrohrglied (130) erfährt;
einen vertikal ausgerichteten Schenkelteil (14), der zur Anordnung entlang dem einen Seitenwandflächenteil (16) des Liners (12, 112) für einen Schüttgutfrachtbehälter ausgeführt ist; und
einen horizontal ausgerichteten Schenkelteil (18), der zur Anordnung entlang dem Bodenwandflächenteil (20) des Liners (12, 112) für einen Schüttgutfrachtbehälter ausgeführt ist,
wobei die Bereiche des vertikal ausgerichteten Schenkelteils (14) und des horizontal ausgerichteten Schenkelteils (18), die von dem rechtwinklig-dreieckigen Eckbereich der aufblasbaren Luftsackkomponente (10, 110) entfernt angeordnet sind, nicht fest an dem einen Seitenwandteil (16) oder an dem Bodenwandflächenteil (20) des Liners (12, 112) für einen Schüttgutfrachtbehälter angebracht sind.

2. System nach Anspruch 1, wobei:
die mindestens eine aufblasbare Luftsackkomponente (10, 110) mehrere axial beabstandete, im Wesentlichen rechtwinklig-dreieckig konfigurierte Eckversteifungen (24) aufweist, die innen in der aufblasbaren Luftsackkomponente (10, 110) angeordnet sind und den gesamten Innenbereich der aufblasbaren Luftsackkomponente (10, 110) in mehrere axial beabstandete Zellen (26) teilen.

3. System nach Anspruch 2, wobei:
die mehreren axial beabstandeten Zellen (26) strömungsmäßig getrennte Kammern umfassen.

4. System nach Anspruch 2, wobei:
die mehreren axial getrennten Zellen (26) strömungsmäßig verbundene Kammern umfassen.

5. System nach einem der vorhergehenden Ansprüche,
wobei:
das mindestens eine Vakuum-Entladungsrohrglied eine einzige Vakuum-Entladungsrohranordnung (130, 2130, 2230, 2330) umfasst, die entlang der axialen Mittellinie des Liners für einen Schüttgutfrachtbehälter angeordnet ist;
der Liner (12, 112) für einen Schüttgutfrachtbehälter ein Paar einander gegenüber angeordneter Eckbereiche nahe einer Verbindungsstelle zwischen jedem der Seitenwandflächenteile (16) und dem Bodenwandflächenteil (20) umfasst; und
die mindestens eine aufblasbare Luftsackkomponente (10, 110) ein Paar aufblasbarer Luftsackkomponenten (110) umfasst, die in den einander gegenüberliegenden Seiteneckbereichen des Liners (12, 112) für einen Schüttgutfrachtbehälter angeordnet sind, um zu bewirken, dass Schüttgutfracht von den einander gegenüber
angeordneten Seiteneckbereichen des Liners (12, 112) für einen Schüttgutfrachtbehälter zu der einzigen Vakuum-Entladungsrohranordnung (130), die entlang der axialen Mittellinie des Liners (12, 112) für einen Schüttgutfrachtbehälter angeordnet ist, strömt, wenn das Paar aufblasbarer Luftsackkomponenten (110) aufgeblasen ist.

6. System nach einem der vorhergehenden Ansprüche,
wobei:
das mindestens eine Vakuum-Entladungsrohrglied (130) eine Vakuum-Entladungsrohranordnung (130, 2130) aufweist, die mehrere Vakuum-Entladungsrohrabschnitte (2130-1, 2130-2) umfasst, die so miteinander verbunden sind, dass sie sich durch die ganze axiale Längserstreckung des Liners (12, 112) für einen Schüttgutfrachtbehälter erstrecken.

7. System nach einem der vorhergehenden Ansprüche, das weiterhin:
Mittel (2115, 2215; 2142, 2242; 2117) umfasst, die mit den mehreren Vakuum-Entladungsrohrabschnitten (2130-1, 2130-2) zur Einstellung des Ausmaßes an Vakuumsaugkraft, mit der jeder der Vakuum-Entladungsrohrabschnitte (2130-1, 2130-2) effektiv beaufschlagt werden kann, wirkverbunden sind.

8. System nach einem der vorhergehenden Ansprüche,
wobei:
das mindestens eine Vakuum-Entladungsrohrglied (130, 2330) eine kreisförmige Querschnittskonfiguration aufweist; und
ein Schraubenfederglied (2325) innen in dem mindestens einen Vakuum-Entladungsrohrglied (2330) angeordnet ist, um das innere Zusammenfallen des mindestens einen Vakuum-Entladungsrohrglieds (2330) zu verhindern, wenn das mindestens eine Vakuum-Entladungsrohrglied (2330) Knick-, Biege- und Windungsvorgänge erfährt.

9. Verfahren zum Entladen von Schüttgutfracht aus einem Schüttgutfrachtbehälter (128), ohne dass der Schüttgutfrachtbehälter (128) in einem gekippten Modus angeordnet werden muss, mit den folgenden Schritten:
Bereitstellen eines Liners (12, 112) für einen Schüttgutfrachtbehälter mit einer im Wesentlichen rechteckigen parallelepipedischen Struktur, wenn er aufgerichtet ist, und der deshalb einen Vorderwandflächenteil, ein Paar Seitenwandflächenteile (16), einen Deckenwandflächenteil, einen Bodenwandflächenteil (20), einen Rückwandflächenteil und eine zwischen dem Rückwandflächenteil und dem Vorderwandflächenteil definierte axiale Längserstreckung umfasst, in einem Schüttgutfrachtbehälter (128);
Wirkbefestigen mindestens eines Vakuum-Entladungsrohrglieds (130) innen in dem Liner (12, 112) für einen Schüttgutfrachtbehälter, so dass das mindestens eine Vakuum-Entladungsrohrglied (130) deshalb die in dem Liner (12, 112) für einen Schüttgutfrachtbehälter angeordnete Schüttgutfracht zu einer in dem Rückwandflächenteil des Liners (12; 112) für einen Schüttgutfrachtbehälter definierten Schüttgutentladeöffnung entladen kann;
Anordnen mindestens einer aufblasbaren Luftsackkomponente (10, 110), die dem Liner (12, 112) für einen Schüttgutfrachtbehälter wirkzugeordnet ist, innen in dem Liner (12, 112) für einen Schüttgutfrachtbehälter in einem luftleeren Zustand;
Gestatten, dass die Schüttgutfracht durch das mindestens eine Vakuum-Entladungsrohrglied (130) unter Schwerkraft abgeführt wird, bis der Schüttwinkel der Schüttgutfracht einen Zustand erreicht, in dem keine Fluidströmung der Schüttgutfracht unter Schwerkraft mehr vorliegt; und
Aufblasen der mindestens einen aufblasbaren Luftsackkomponente (10, 110), um zu bewirken, dass die in dem Liner (12, 112) für einen Schüttgutfrachtbehälter angeordnete Schüttgutfracht wieder Fluidströmung zu dem mindestens einen Vakuum-Entladungsrohrglied (130) erfährt, ohne dass der Schüttgutfrachtbehälter (128) in einem gekippten Modus angeordnet werden muss, um den Fluidstrom der Schüttgutfracht zu dem mindestens einen Vakuum-Entladungsrohrglied (130) zu erreichen und um das Entleeren der Schüttgutfracht aus dem Liner (12, 112) für einen Schüttgutfrachtbehälter zu erleichtern,
**dadurch gekennzeichnet, dass**
die mindestens eine aufblasbare Luftsackkomponente (10, 110) in einem Eckbereich des Liners (12, 112) für einen Schüttgutfrachtbehälter nahe einer Verbindungsstelle eines Seitenwandflächenteils (16) und des Bodenwandflächenteils (20) angeordnet wird, wobei die mindestens eine aufblasbare Luftsackkomponente (10, 110) im aufgeblasenen Zustand Folgendes aufweist:
eine im Wesentlichen rechtwinklig-dreieckige Querschnittskonfiguration, wobei der Hypotenusenteil (22) davon zu dem mindestens einen Vakuum-Entladungsrohrglied (130) angeordnet ist;
einen vertikal ausgerichteten Schenkelteil (14), der zur Anordnung entlang dem einen Seitenwandflächenteil (16) des Liners (12, 112) für einen Schüttgutfrachtbehälter ausgeführt ist; und
einen horizontal ausgerichteten Schenkelteil (18), der zur Anordnung entlang dem Bodenwandflächenteil (20) des Liners (12, 112) für einen Schüttgutfrachtbehälter ausgeführt ist,
wobei die Bereiche des vertikal ausgerichteten Schenkelteils (14) und des horizontal ausgerichteten Schenkelteils (18), die von dem rechtwinklig-dreieckigen Eckbereich der aufblasbaren Luftsackkomponente (10, 110) entfernt angeordnet sind, nicht fest an dem einen Seitenwandteil (16) oder an dem Bodenwandflächenteil (20) des Liners (12) für eine Schüttgutfracht angebracht sind; und
die mindestens eine aufblasbare Luftsackkomponente (10, 110) zu ihrer im Wesentlichen rechtwinklig-dreieckigen Querschnittskonfiguration aufgeblasen wird, um den Schüttwinkel der in dem Liner (12, 112) für einen Schüttgutfrachtbehälter angeordneten Schüttgutfracht zu ändern und dadurch zu bewirken, dass die in dem Liner (12, 112) für einen Schüttgutfrachtbehälter angeordnete Schüttgutfracht wieder eine Strömung zu dem mindestens einen Vakuum-Entladungsrohrglied (130) erfährt.

## Revendications

1. Système de revêtement intérieur de benne de transport de matériau en vrac destiné à être disposé dans une benne de transport de matériau en vrac (128), comprenant :
un revêtement intérieur (12, 112) de benne de transport de matériau en vrac, destiné à être disposé dans une benne de transport de matériau en vrac (128), pour contenir du matériau en vrac, et ayant une structure essentiellement parallélépipédique rectangle une fois érigée, ledit revêtement intérieur (12, 112) de benne de transport de matériau en vrac comprenant une portion de surface de paroi avant, une paire de portions de surface de paroi latérale (16), une portion de surface de paroi supérieure, une portion de surface de paroi de fond (20), une portion de surface de paroi arrière, et une étendue axiale longitudinale définie entre ladite portion de surface de paroi arrière et ladite portion de surface de paroi avant ;
au moins un organe de tube de décharge à vide (130) disposé à l'intérieur dans ledit revêtement intérieur (12, 112) de benne de transport de matériau en vrac pour décharger le matériau en vrac, qui doit être disposé à l'intérieur dudit revêtement intérieur de benne de transport de matériau en vrac, vers un orifice de décharge de matériau en vrac défini dans ladite portion de surface de paroi arrière dudit revêtement intérieur de benne de transport de matériau en vrac ; et
au moins un composant de sac d'air gonflable (10, 110) disposé intérieurement à l'intérieur dudit revêtement intérieur (12, 112) de benne de transport de matériau en vrac, l'au moins un composant de sac d'air gonflable (10, 110) étant associé fonctionnellement avec ledit revêtement intérieur (12, 112) de benne de transport de matériau en vrac pour amener le matériau en vrac à s'écouler fluidiquement vers ledit au moins un organe de tube de décharge à vide (130) disposé dans ledit revêtement intérieur (12, 112) de benne de transport de matériau en vrac lorsque ledit au moins un composant de sac d'air gonflable (10, 110) est gonflé à partir d'un état relativement dégonflé dans un état relativement gonflé de manière à faciliter l'évacuation du matériau en vrac de l'intérieur dudit revêtement intérieur (12, 112) de benne de transport de matériau en vrac sans nécessiter l'inclinaison de ladite benne de transport de matériau en vrac (128),
**caractérisé en ce que** ledit au moins un composant de sac d'air gonflable (10, 110) est disposé dans une région de coin du revêtement intérieur (12, 112) de benne de transport de matériau en vrac à proximité d'une jonction d'une portion de surface de paroi latérale (16) et de la portion de surface de paroi de fond (20), et, lorsqu'il est gonflé, présente :
une configuration en section transversale substantiellement en forme de triangle rectangle dont la portion d'hypoténuse (22) est disposée vers ledit au moins un organe de tube de décharge à vide (130), en modifiant ainsi l'angle de repos du matériau en vrac disposé dans ledit revêtement intérieur (12, 112) de benne de transport de matériau en vrac de manière à amener le matériau en vrac à s'écouler fluidiquement vers ledit au moins un organe de tube de décharge à vide (130) ; une portion de branche orientée verticalement (14) prévue pour être disposée le long de ladite une portion de surface de paroi latérale (16) du revêtement intérieur (12, 112) de benne de transport de matériau en vrac ; et
une portion de branche orientée horizontalement (18) prévue pour être disposée le long de ladite portion de surface de paroi de fond (20) du revêtement intérieur (12, 112) de benne de transport de matériau en vrac,
les régions de la portion de branche orientée verticalement (14) et de la portion de branche orientée horizontalement (18) qui sont situées à distance de la région de coin en forme de triangle rectangle du composant de sac d'air gonflable (10, 110) n'étant pas attachées de manière fixe à ladite une portion de paroi latérale (16) ou à la portion de surface de paroi de fond (20) du revêtement intérieur (12) de benne de transport de matériau en vrac.

2. Système selon la revendication 1, dans lequel :
ledit au moins un composant de sac d'air gonflable (10, 110) a une pluralité de soufflets (24) espacés axialement, de configuration substantiellement en forme de triangle rectangle, disposés intérieurement à l'intérieur du composant de sac d'air gonflable (10, 110) et divisant toute la région interne du composant de sac d'air gonflable (10, 110) en une pluralité de cellules (26) séparées axialement.

3. Système selon la revendication 2, dans lequel :
ladite pluralité de cellules (26) séparées axialement comprend des compartiments séparés fluidiquement.

4. Système selon la revendication 2, dans lequel :
ladite pluralité de cellules (26) séparées axialement comprend des compartiments connectés fluidiquement.

5. Système selon l'une quelconque des revendications précédentes, dans lequel :
ledit au moins un organe de tube de décharge à vide comprend un unique ensemble de tube de décharge à vide (130, 2130, 2230, 2330) disposé le long de l'axe médian axial dudit revêtement intérieur de benne de transport de matériau en vrac ;
ledit revêtement intérieur (12, 112) de benne de transport de matériau en vrac comprend une paire de régions de coin latérales disposées à l'opposé l'une de l'autre à proximité d'une jonction entre chacune des portions de surface de paroi latérale (16) et de la portion de surface de paroi de fond (20) ; et
ledit au moins un composant de sac d'air gonflable (10, 110) comprend une paire de composants de sac d'air gonflables (110) disposés dans les régions de coin latérales disposées à l'opposé l'une de l'autre dudit revêtement intérieur (12, 112) de benne de transport de matériau en vrac, de manière à amener le matériau en vrac à s'écouler depuis lesdites régions de coin latérales disposées a l'opposé l'une de l'autre dudit revêtement intérieur (12, 112) de benne de transport de matériau en vrac vers ledit unique ensemble de tube de décharge à vide (130) disposé le long dudit axe médian axial dudit revêtement intérieur (12, 112) de benne de transport de matériau en vrac lorsque ladite paire de composants de sac d'air gonflable (110) est gonflée.

6. Système selon l'une quelconque des revendications précédentes, dans lequel :
ledit au moins un organe de tube de décharge à vide (130) comprend un ensemble de tube de décharge à vide (130, 2130) qui comprend une pluralité de sections de tube de décharge à vide (2130-1, 2130-2) connectées ensemble de manière à s'étendre à travers ladite étendue axiale longitudinale dudit revêtement intérieur (12, 112) de benne de transport de matériau en vrac.

7. Système selon la revendication 6, comprenant en outre :
un moyen (2115,2215:2142,2242:2117) connecté fonctionnellement à ladite pluralité de sections de tube de décharge à vide (2130-1, 2130-2) pour ajuster la quantité de force d'aspiration de vide qui peut être effectivement appliquée sur chacune desdites sections de tube de décharge à vide (2130-1, 2130-2).

8. Système selon l'une quelconque des revendications précédentes, dans lequel :
ledit au moins un organe de tube de décharge à vide (130, 2330) a une configuration circulaire en section transversale ; et
un organe de ressort à boudin (2325) est disposé intérieurement à l'intérieur dudit au moins un organe de tube de décharge à vide (2330) de manière à empêcher l'affaissement interne dudit au moins un organe de tube de décharge à vide (2330) lorsque ledit au moins un organe de tube de décharge à vide (2330) est soumis à une manipulation de fléchissement, pliage, ou enroulement.

9. Procédé pour décharger un matériau en vrac d'une benne de transport de matériau en vrac (128) sans nécessiter d'orienter la benne de transport de matériau en vrac (128) en mode incliné, comprenant les étapes consistant à :
fournir un revêtement intérieur (12, 112) de benne de transport de matériau en vrac ayant une structure essentiellement parallélépipédique rectangle une fois érigée et comprenant par conséquent une portion de surface de paroi avant, une paire de portions de surface de paroi latérale (16), une portion de surface de paroi supérieure, une portion de surface de paroi de fond (20), une portion de surface de paroi arrière, et une étendue longitudinale définie entre ladite portion de surface de paroi arrière et ladite portion de surface de paroi avant, dans une benne de transport de matériau en vrac (128) ;
monter fonctionnellement au moins un organe de tube de décharge à vide (130) intérieurement à l'intérieur dudit revêtement intérieur (12, 112) de benne de transport de matériau en vrac, de telle sorte que ledit au moins un organe de tube de décharge à vide (130) puisse de ce fait décharger le matériau en vrac, qui est disposé à l'intérieur dudit revêtement intérieur (12, 112) de benne de transport de matériau en vrac, vers un orifice de décharge de matériau en vrac défini dans ladite portion de surface de paroi arrière dudit revêtement intérieur (12, 112) de benne de transport de matériau en vrac ;
disposer au moins un composant de sac d'air gonflable (10, 110), associé fonctionnellement audit revêtement intérieur (12, 112) de benne de transport de matériau en vrac, intérieurement à l'intérieur dudit revêtement intérieur (12, 112) de benne de transport de matériau en vrac dans un état dégonflé ;
permettre au matériau en vrac d'être évacué à travers ledit au moins un organe de tube de décharge à vide (130) sous l'effet des forces de gravité jusqu'à ce que l'angle de repos du matériau en vrac atteigne un degré auquel il ne se produit plus d'écoulement fluidique du matériau en vrac sous l'effet des forces de gravité ; et
gonfler ledit au moins un composant de sac d'air gonflable (10, 110) pour amener le matériau en vrac disposé dans ledit revêtement intérieur (12, 112) de benne de transport de matériau en vrac à subir à nouveau un écoulement fluidique vers ledit au moins un organe de tube de décharge à vide (130) sans que ladite benne de transport de matériau en vrac (128) n'ait besoin d'être orientée dans un mode incliné afin de réaliser l'écoulement fluidique du matériau en vrac vers ledit au moins un organe de tube de décharge à vide (130) et de faciliter l'évacuation du matériau en vrac hors dudit revêtement intérieur (12, 112) de benne de transport de matériau en vrac,
**caractérisé en ce que**
ledit au moins un composant de sac d'air gonflable (10, 110) est disposé dans une région de coin du revêtement intérieur (12, 112) de benne de transport de matériau en vrac à proximité d'une jonction d'une portion de surface de paroi latérale (16) et de la portion de surface de paroi de fond (20), l'au moins un composant de sac d'air gonflable (10, 110), une fois gonflé, ayant :
une configuration en section transversale substantiellement en forme de triangle rectangle, dont la portion d'hypoténuse (22) est orientée vers ledit au moins un organe de tube de décharge à vide (130) ;
une portion de branche orientée verticalement (14) prévue pour être disposée le long de ladite une portion de surface de paroi latérale (16) du revêtement intérieur (12, 112) de benne de transport de matériau en vrac ; et
une portion de branche orientée horizontalement (18) prévue pour être disposée le long de ladite portion de surface de paroi de fond (20) du revêtement intérieur (12, 112) de benne de transport de matériau en vrac,
les régions de la portion de branche orientée verticalement (14) et de la portion de branche orientée horizontalement (18) qui sont situées à distance de la région de coin en forme de triangle rectangle du composant de sac d'air gonflable (10, 110) n'étant pas attachées de manière fixe à ladite une portion de paroi latérale (16) ou à la portion de surface de paroi de fond (20) du revêtement intérieur (12) de benne de transport de matériau en vrac ; et
ledit au moins un composant de sac d'air gonflable (10, 110) est gonflé dans sa configuration en section transversale substantiellement en forme de triangle rectangle, de manière à modifier l'angle de repos du matériau en vrac disposé dans ledit revêtement intérieur (12, 112) de benne de transport de matériau en vrac et à ainsi amener le matériau en vrac disposé dans ledit revêtement intérieur (12, 112) de benne de transport de matériau en vrac à subir à nouveau un écoulement fluidique vers ledit au moins un organe de tube de décharge à vide (130).
